# EUROPEAN PATENT SPECIFICATION

(11) **EP 3 387 732 B1**
(45) Date of publication and mention of the grant of the patent: **03.06.2020**
(21) Application number: 16873458.0
(22) Date of filing: 30.11.2016
(51) Int. Cl.: H02J 7/04, H02J 7/00, B60L 58/18, B60K 6/20, B60L 53/00, B60L 58/13, B60L 58/20, B60L 58/26, B60L 58/27, B60W 20/13, B60W 30/18, B60W 30/192

(54) **METHOD AND CONTROL SYSTEM FOR CHARGING AN ACCESSORY BATTERY AND A HYBRID ENERGY STORAGE OF A PLUG-IN HYBRID VEHICLE**
VERFAHREN UND STEUERUNGSSYSTEM ZUM LADEN EINER ZUBEHÖRBATTERIE UND HYBRIDENERGIESPEICHER EINES PLUGIN-HYBRID-FAHRZEUGS
PROCÉDÉ ET SYSTÈME DE COMMANDE POUR CHARGER UNE BATTERIE AUXILIAIRE ET UN STOCKAGE D'ÉNERGIE HYBRIDE DE VÉHICULE HYBRIDE RECHARGEABLE

(30) Priority: 08.12.2015 SE 1551609
(43) Date of publication of application: 17.10.2018
(73) Proprietor: Scania CV AB, 151 87 Södertälje (SE)
(72) Inventor: SJÖDIN, Robert, 611 44 Nyköping (SE); POLI, Ninos, 152 59 Södertälje (SE)
(86) International application number: PCT/SE2016/051186
(87) International publication number: WO 2017/099649

(56) References cited:
- EP-A1- 2 685 599
- WO-A1-2013/089612
- WO-A1-2014/169927
- GB-A- 2 255 243
- GB-A- 2 255 243
- JP-A- 2000 040 536
- SE-A1- 1 351 512
- US-A1- 2011 140 660
- US-A1- 2011 210 698
- US-A1- 2011 210 698
- US-A1- 2013 307 489
- US-A1- 2013 307 489
- US-A1- 2014 039 735
- US-A1- 2015 165 924
- US-B2- 7 595 606

## Description

### BACKGROUND OF THE INVENTION AND PRIOR ART

The invention relates to a method for controlling charging of a hybrid vehicle and a control system for a hybrid vehicle as defined by claims 1 and 15, respectively. A hybrid vehicle comprising such a control system is also provided in accordance with claim 16.

In general, the present invention relates to charging a vehicle, and especially to charging of the hybrid batteries as well as of the convenience batteries of the vehicle.

Plug-in hybrid vehicles includes both an internal combustion engine and an electric machine, which electric machine receives power from a high voltage hybrid energy storage. Such hybrid vehicles normally also includes a low voltage battery for powering loads of the vehicle, such as accessories including the electronic system of the vehicle. In the prior art it has been suggested to charge a low voltage accessory battery simultaneously as charging the hybrid energy storage of the plug-in hybrid vehicle.

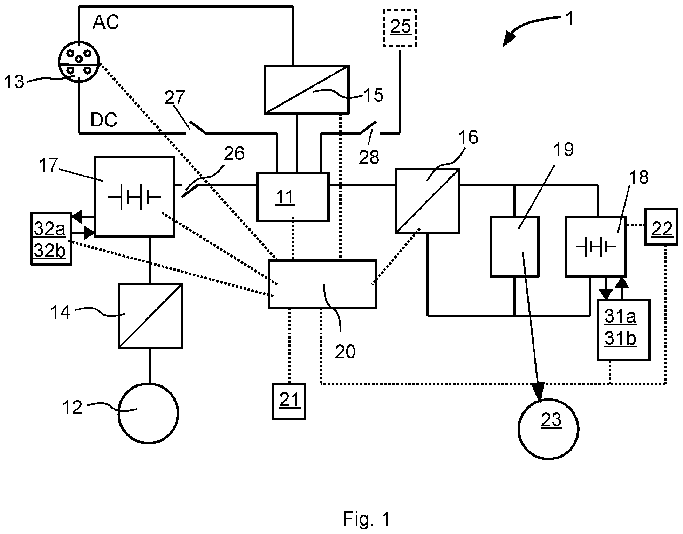

US 2012/0123625 ('625) describes charging of an electric or hybrid vehicle, wherein a main high-voltage battery (10 in'625) for driving an electric motor of the vehicle and a low voltage accessory or auxiliary battery (70) for driving accessories such as the electronic system of the vehicle, are charged simultaneously (see fig. 1 and abstract of '625). The low voltage battery will normally be charged by means of a first, or sub, DC/DC converter (115). However, if the power supplied from the first DC/DC converter is too low so that the auxiliary battery (70) might not be able to provide power to the electronic system, a second, or main, DC/DC converter (60) is started (§0076 of '625).

Within the art of charging, it has also been suggested to use a planned charging performed within a predefined time period, wherein the charging current to the hybrid energy storage may be limited so as not to negatively affect the hybrid energy storage during the charging.

Further, the documents US 2011/0210698 A1, GB 2 255 243 A and US 7,595,606 B2 are disclosing methods for controlling charging of a hybrid vehicle.

### SUMMARY OF INVENTION

It is an object of the invention to provide a method for charging both an accessory battery as well as a hybrid energy storage of a hybrid vehicle.

An aim of the invention is to ensure start of the internal combustion engine of the hybrid vehicle.

An aim is to enable a careful charging of a hybrid vehicle so as to limit the stress experienced by the accessory battery and the hybrid energy storage during the charging.

According to a first aspect, the invention provides a method for controlling charging of a hybrid vehicle with electric energy received from an external energy supply, which hybrid vehicle comprises an electric machine, an internal combustion engine, a hybrid energy storage and an accessory battery, wherein the hybrid energy storage is arranged for supplying electric power to the electric machine and wherein the accessory battery is arranged for supplying power to start the internal combustion engine. The hybrid vehicle is further provided with means for defining a time period for performing the charging. The method comprises checking whether a time period has been defined and controlling the charging in accordance with a first mode when a time period has not been defined and in accordance with a second mode when a time period has been defined. The first mode and the second mode comprises:
- monitoring the state of charge of the accessory battery,
- determining a charging threshold for enabling start of the internal combustion engine by means of the accessory battery, and
- determining whether the charging level of the accessory battery is above the charging level threshold. The first mode further comprises supplying a maximum charging current to the accessory battery when the charging level of the accessory battery is lower than the charging threshold. The second mode further comprises:
- determining a first charging need for the accessory battery and a second charging need for the hybrid energy storage,
- determining whether charging with reduced currents is possible for the accessory battery and the hybrid energy storage based on the determined first and second need and the charging time period, and
- supplying a charging current below a maximum charging current of the hybrid energy storage to the hybrid energy storage and a charging current below a maximum charging current of the accessory battery to the accessory battery when reduced currents are possible.

In this way the method will perform a fast charging when no time period is defined, wherein the charging of the accessory battery is prioritized to ensure a start of the internal combustion engine. The time period, when defined, is utilized to provide charging with lower charging currents when possible so that a more careful charging of the batteries is provided. The time period can be specified by the user on a HMI (Human Machine Interface), wherein the user may specify the time period or specify an end time for the charging process.

In an embodiment, said first mode comprises supplying available power to the hybrid energy storage when supplying the maximum charging current to the accessory battery, when power for charging the hybrid energy storage simultaneously as supplying the maximum charging current to the accessory battery is available. If power is not available, the hybrid energy storage may not be connected, or disconnected if already connected, by means of controlling a contact switch at an electric connection of the hybrid energy storage.

In an embodiment, said first mode comprises supplying a maximum charging current to the hybrid energy storage when the charging level of the accessory battery is higher than the charging level threshold. Thus, the charging of the accessory battery up to the charging level threshold is prioritized, and then the hybrid energy storage is charged quickly.

In an embodiment, said first mode comprises maintaining the charging level of the accessory battery above the threshold when the charging level of the accessory battery is, or becomes, higher than the charging level threshold. Thus consumption of energy from the accessory battery during the charging process is counteracted.

In an embodiment, the method further includes repeating the step of determining the charging threshold, and the step of determining whether the charging level of the accessory battery is above the charging level threshold. In this way the charging level threshold is updated. Preferably, the determining of the charging level threshold is based on a temperature, which temperature is any of the outside temperature of the hybrid vehicle and/or the temperature of the accessory battery and/or the temperature of the internal combustion engine. The outside temperature can be measured or retrieved from a metrological forecast received by a communication unit connected to the electronic system of the hybrid vehicle.

In an embodiment, said second mode further comprises:
- supplying a maximum charging current of the accessory battery to the accessory battery when determining that reduced charging currents are not possible and when determining that the charging level of the accessory battery is below the charging level threshold, and
- supplying a maximum charging current of the hybrid energy storage to the hybrid energy storage when determining that reduced charging currents are not possible and when determining that the charging level of the accessory battery is above the charging level threshold.

In an embodiment, said second mode further comprises regulating the temperature of the accessory battery towards the end of the time period. In a preferred embodiment, the regulating of the temperature includes increasing the temperature by means of supplying a higher charging current to the accessory battery. In a preferred embodiment, the charging current is increased towards the end of the charging, wherein the last fraction of the charging is provided using a higher current, such as supplying the last 10% of the charging with a higher current in order to increase the temperature.

In an embodiment, said second mode further comprises regulating the temperature of the hybrid energy storage towards the end of the time period. In an embodiment by means of supplying a higher charging current in the same way as the accessory battery is supplied by means of a higher charging current.

An alternative way of regulating the temperature of any of the hybrid energy storage and the accessory battery is to provide a heater at the respective storage or battery and activate the heater or heaters towards the end of the time period in order to increase the temperature of the hybrid energy storage and/or the accessory battery.

Increasing the temperature of the hybrid energy storage may be performed by means of activating a heater that is arranged to heat the hybrid energy storage, and/or by means of supplying a higher charging current to the hybrid energy storage.

In an embodiment, the regulating of the temperature accessory battery includes reducing the temperature by means of activating a cooler that is arranged to cool the accessory battery.

The heater and cooler of each battery is preferably a combined heater and cooler configured e.g. to selectively heat or cool a liquid that is supplied to and from heat exchanging means at the accessory battery.

In an embodiment, reducing the temperature of the hybrid energy storage is provided by means of activating a cooler that is arranged to cool the hybrid energy storage.

In an embodiment, the hybrid vehicle is provided with at least one cooler arranged to cool the accessory battery and/or the hybrid energy storage. In this embodiment the second mode, or the first mode, may include regulating the temperature of any of the batteries by activating the at least one cooler to decrease the temperature of the hybrid energy storage and/or the accessory battery.

The temperature is preferably regulated in view of the temperature measured at each of the hybrid energy storage and the accessory battery.

In an embodiment, said first mode and said second mode further comprises informing a user of:
- the charging level of the hybrid energy storage and/or the accessory battery; and/or informing the user of:
- an estimated time left for charging of the hybrid energy storage, which time left is estimated based on the charging level of the hybrid energy storage, the charging level of the accessory battery and the available power. Preferably, the estimated time left is preferably also based on the temperature of the accessory battery and the hybrid energy storage.

In an embodiment, said second mode further comprises informing a user of an estimation of the expected charging level at the end of the charging for the hybrid energy storage or for the accessory battery. The expected charging level is estimated based on the charging level of the hybrid energy storage, the charging level of the accessory battery, the available power and the time period (T).

According to a second aspect, the invention provides a control system for controlling charging of a hybrid vehicle with electric energy from an external energy supply, which hybrid vehicle comprises an electric machine, an internal combustion engine, a hybrid energy storage and an accessory battery, wherein the hybrid energy storage is arranged for supplying electric power to the electric machine and wherein the accessory battery is arranged for supplying power to start the internal combustion engine. The hybrid vehicle is further provided with means for defining a time period for performing the charging, said control system being configured to perform a method for charging a hybrid vehicle in accordance with the first aspect of the invention.

According to a third aspect, the present invention provides a hybrid vehicle comprising an electric machine, an internal combustion engine, a hybrid energy storage and an accessory battery, wherein the hybrid energy storage is arranged for supplying electric power to the electric machine and wherein the accessory battery is arranged for supplying power to start the internal combustion engine. The hybrid vehicle is further provided with means for defining a time period (T) for performing the charging, and a control system according to the second aspect of the invention.

### BRIEF DESCRIPTION OF DRAWINGS

The invention will be described, by way of example, with reference to the accompanying drawings, in which:
Figure 1 is a schematic illustration of parts of an embodiment of a plug-in hybrid vehicle including electric and electronic components;
Figure 2 is a flow chart illustrating a method of controlling charging of the hybrid vehicle;
Figure 3 is a schematic flow chart illustrating a first mode of operation of the method;
Figure 4 is a schematic flow chart illustrating a second mode of operation of the method.

### DETAILED DECRIPTION OF EMBODIMENTS

The invention will in the following be described with reference to the accompanying drawings, in which certain embodiments of the invention are illustrated. The invention may however be embodied in many different forms and should not be construed as limited to the embodiments; rather, these embodiments are provided by way of example in order to facilitate in making the invention.

Figure 1 is a simplified illustration of a hybrid vehicle 1, especially illustrating parts of an electric system and an electronic system of the hybrid vehicle 1. Electric connections are illustrated in straight lines and communication connections are illustrated in dotted lines. The hybrid vehicle 1 comprises a hybrid controller 20, an electric machine 12 and an internal combustion engine 23. The hybrid vehicle 1 further comprises a first battery 17 and a second battery 18. The first battery 17 is arranged for providing power for the propulsion of the hybrid vehicle 1. The first battery 17 may comprise capacitors as energy storage elements and the first battery is hereinafter referred to as a hybrid energy storage 17. The hybrid energy storage 17 is connected to the electric machine 12 via an AC/DC inverter 14. The second battery 18 is arranged to provide power for a low voltage DC system of the vehicle, including providing power to loads 19, including accessories and a start motor (not illustrated) for the internal combustion engine 23. The second battery 18 is hereinafter referred to as an accessory battery 18. The hybrid energy storage 17 has a high DC level voltage, such as 400 V or 800 V, higher than the accessory battery 18, which supplies DC at a low voltage e.g. 12 or 24 V.

The hybrid vehicle 1 is provided with a charging socket 13 configured to receive power from an external energy supply, such as a charging station, by means of being connected to a charging plug of the external energy supply. The charging socket 13 is provided with contact means for receiving AC as well as DC current from the external energy supply. The hybrid vehicle 1 further comprises a junction box 11 that connects the charging socket 13 to the hybrid energy storage 17, and to the accessory battery 18. A hybrid battery charger 15 that includes an AC/DC inverter is configured between the charging socket 13 and the junction box 11, which hybrid battery charger 15 is configured to convert AC power received from the external energy supply into DC power at the voltage level of the hybrid energy storage 17. A direct connection is also provided between the DC contact side of the charging socket 13 and the junction box 11 for direct transfer of DC power received at the hybrid system voltage level to the junction box 11, without passing the hybrid battery charger 15. A DC/DC converter 16 is arranged between the junction box 11 and the low voltage DC system of the accessory battery 18, which DC/DC converter 16 is configured to convert DC power from the hybrid battery charger 15 or the charging socket 13. The DC/DC converter 16 is configured to convert the power received at the high voltage level of the hybrid system into DC power at the low voltage level of the accessory battery 18. A contact switch 26 is arranged between the junction box 11 and the hybrid energy storage 17, which contact switch 26 is arranged for connecting and disconnecting the hybrid energy storage 17 to/from the power received from the external energy supply. The hybrid battery charger 15 may also include a DC/DC converter configured for converting DC power received from the external energy supply to the voltage level of the hybrid system, wherein DC power received, e.g. at 200 V or 400 V, may be converted to DC power at the voltage level, e.g. 800 V, of the hybrid energy storage 17. The hybrid vehicle 1 is configured to receive AC as well as DC power from the external energy supply, which electric power may be received at a number of voltage levels, and converted by means of the hybrid battery charger 15 to the DC voltage level of the hybrid energy storage 17 and by means of the DC/DC converter 16 into the DC voltage level of the accessory battery 18.

The charging of the hybrid vehicle 1 is controlled by the control system of the hybrid vehicle. For the purpose of charging, the control system primarily includes the hybrid battery charger 15, the hybrid controller 20 and the DC/DC converter 16. The control functions can be divided between these units of the control system. The charging will be exemplified with the hybrid controller 20 as responsible for the charging process. Thus, in the following example given with reference to figure 1, the charging is controlled by the hybrid controller 20, which is communicatively connected to the charging socket 13, in order to establish communication with the external energy supply, and is also communicatively connected to the hybrid energy storage 17, the accessory battery 18, the hybrid battery charger 15, the DC/DC converter 16 and the junction box 11.

The communication connections are for illustrative purposes illustrated as direct connections between the hybrid system controller 20 and the other units, but may preferably be provided, fully or in part, by means of an electronic communication bus, such as being a part of a CAN system of the hybrid vehicle 1.

The hybrid controller 20 is configured to establish communication with an external energy supply and request charging from the external energy supply. The hybrid controller 20 is also configured to monitor the hybrid energy storage 17 and the accessory battery 18, especially the energy/charging level, such as the SOC (state-of-charge), of the hybrid energy storage 17 and the charging level, such as the SOC, of the accessory battery 18, and the charging currents supplied to the hybrid energy storage 17 and the accessory battery 18. The hybrid controller 20 is configured to determine whether the charging level of the accessory battery 18 is high enough to enable a safe start of the internal combustion engine 23 of the hybrid vehicle 1. The hybrid controller 20 is preferably also configured to monitor the temperature of the accessory battery 18, monitor the temperature of the hybrid energy storage 17 and may also monitor the outside temperature, i.e. the environmental temperature, and the temperature of the internal combustion engine 23 of the hybrid vehicle 1. The hybrid controller 20 is configured to determine a charging level needed for starting the internal combustion engine 23 of the hybrid vehicle 1, which charging level may be dependent on the temperature of the accessory battery 18, and the internal combustion engine 23 temperature. For this purpose the hybrid controller 20 is configured to use the internal combustion engine 23 temperature when determining the charging level needed for starting the internal combustion engine 23, wherein the engine temperature may be the actual temperature or an estimated temperature of the internal combustion engine 23 at the end of, or after, the charging, which estimated temperature may be determined based on the temperature outside the hybrid vehicle 1.

The hybrid controller 20 is configured to ensure start of the internal combustion engine 23 and is therefore configured to prioritize charging of the accessory battery 18. The hybrid controller 20 is configured to charge the hybrid energy storage 17 without negatively affecting a safe start of the internal combustion engine 23.

In figure 1, the hybrid controller 20 is configured to monitor the accessory battery 18 by means of communicating with an electronic control unit 22 arranged at the accessory battery 18, which electronic control unit 22 is configured to monitor the charging current supplied to the accessory battery 18, the SOC of the accessory battery 18 and the temperature of the accessory battery 18. The hybrid controller 20 is configured to receive a measurement of the charging current from the electronic control unit 22 and control the DC/DC converter 16 to regulate the charging current in view of the measurement. Should the power consumption of any of the accessories 19 vary during charging, the hybrid controller 20 may regulate the power supplied from DC/DC converter 16 to ensure a suitable charging current being supplied to the accessory battery 18. The charging level needed for performing a start of the internal combustion engine 23 varies with the temperature, and therefore the hybrid controller 20 is configured to determine and update a threshold that is used for ensuring an internal combustion engine start based on the engine temperature. The hybrid controller 20 is suitably adapted to regulate the charging current to the accessory battery 18 also on the basis of an estimation of the engine temperature, which may be based on the outside temperature. The electronic control system of the hybrid vehicle 1 may further include means for receiving weather forecasts and may be configured to use such forecasts for estimating the internal combustion engine temperature at the end of a charging process and use such an estimated internal combustion engine temperature for determining and/or updating the threshold for the charging level of the accessory battery 18.

The hybrid controller 20 is also communicatively connected to an HMI 21 (human-machine-interface), for example including a touch screen, display and/or push buttons, wherein the hybrid controller 20 is configured to receive input from a user, especially an indication of the time when the charging should end or a charging time period (T) indicating the length of the charging process. The hybrid controller 20 is configured to use such input to plan the charging process. The hybrid controller 20 is further configured to inform the user of the energy level or charging level, such as SOC, of the hybrid energy storage 17 and an estimated time for fully charging the hybrid energy storage 17, and is configured to inform the user of the status of the accessory battery 18, including SOC, and the time needed for charging the accessory battery 18 at least up to the charging level threshold for performing a start of the internal combustion engine 23. The hybrid controller 20 is also configured to warn the user by means of the HMI 21 when the charging level of the accessory battery 18 is, or becomes, so low that a start of the internal combustion engine 23 is jeopardized. The hybrid controller 20 is also configured to estimate and inform the user of the expected charging level at the end of the charging for the hybrid energy storage 17 and preferably also the expected charging level, at the end of the charging, for the accessory battery 18

The hybrid vehicle 1 may also comprise additional charging means 25, indicated by broken lines, that are connected to the junction box 11, which additional charging means 25 comprises a charging unit for a pantograph connection and/or a charging unit for inductive charging. For example, the additional charging means 25 may include pantograph connectors arranged at a roof of the hybrid vehicle 1, or induction power receivers arranged at a floor of the hybrid vehicle 1.

A first switch 26 is arranged in the connection between the junction box 11 and the hybrid energy storage 17. The control system, preferably the hybrid controller 20, is operatively connected to the first switch 26 to selectively connect and disconnect the hybrid energy storage 17 from the junction box 11. The hybrid controller 20 is configured to operate the switch 26 to enable charging of only the accessory battery 18, and enable charging of both the accessory battery 18 and the hybrid energy storage 17.

A second switch 27 and a third switch 28 are also illustrated in figure 1, which second 27 and third switch 28 is arranged in the connector between the charging socket 13 and the junction box 11 and between the additional charging means 25 and the junction box 11, respectively. In case of more than one additional charging means 25 are provided, each is connected via a respective third switch 28. The control system is configured to control the second 27 and third 28 switch in order to select which external charging that should be used to charge the batteries 17, 18. Preferably the hybrid controller 20 is configured to select which external power source is connected for the charging process by means of operating the second 27 and third switch 28 and controlling the hybrid battery charger 15, wherein the hybrid controller is configured to only allow connection of one power source at a time. This is important as a safety measure, but not for the charging strategy as such. Other types of safety arrangements for avoiding connection of two external power sources to one another via the hybrid vehicle 1 may be provided in addition or as alternatives.

Combined heater and cooler units 31a, 31b 32a, 32b are arranged to supply heat to, and remove heat from, each of the batteries 17, 18. The hybrid controller 20 is configured for controlling each of the heaters 31a, 32a and coolers 31b, 32b.

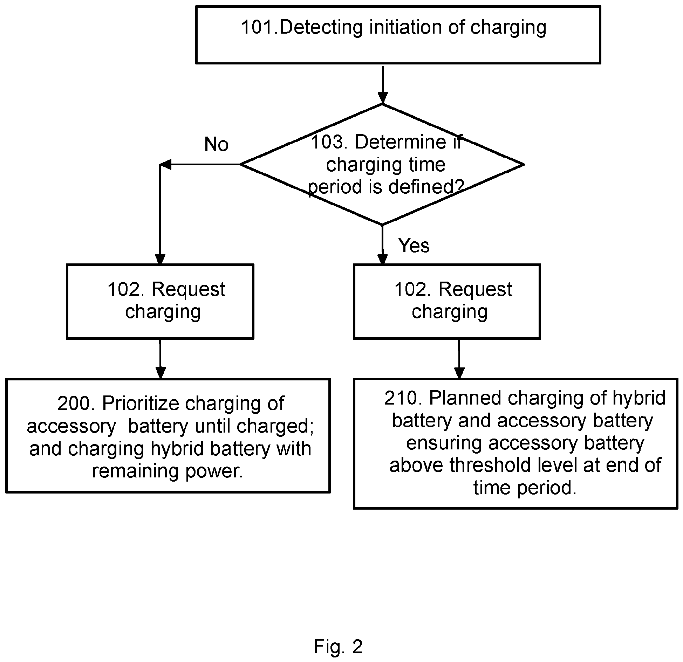

The functioning of the control system, especially the hybrid controller 20, will be explained further with reference to figures 2 to 4, which figures illustrate methods for controlling charging of the hybrid vehicle 1.

The method of controlling charging of a hybrid vehicle 1 is performed by the control system and starts with detecting 101 initiation of a charging process. The user may initiate charging of the hybrid vehicle 1 by connecting the hybrid vehicle 1 to an external energy supply, for example by insertion of a charging plug in the charging socket 13, and may also specify a time instance when the charging should end by means of the HMI 21. The control system, preferably the hybrid controller 20 or the hybrid battery charger 15, detects 101 the initiation of the charging process, by detecting insertion of a charging plug into the charging socket 13 or an initiation signal from the additional charging means 25. The control system performs a hand-shake operation with the external energy supply, and will subsequently request charging 102. After initiation 101, the method continues with determining 103 whether a charging time period (T) is or can be defined. If such a time period (T) cannot be determined, the method includes selecting a first charging mode 200, or fast charging mode, wherein fast charging of the accessory battery 18 is prioritized until the SOC of the accessory battery 18 is high enough to ensure a safe start of the internal combustion engine 23.

In the first mode 200, the hybrid energy storage 17 is charged if possible, i.e. whether power is available for also charging the hybrid energy storage 17. When the accessory battery 18 has been charged, the first mode includes a fast charging of the hybrid energy storage 17.

If a time period (T) for the charging process can be determined, for example when the time period (T) has been specified by the user or an end time has been specified from which the available time period (T) from charging can be determined, the method includes selecting a second mode 210, or planned charging mode. The second mode 210 of charging includes performing, or planning, the charging in view of the time period (T) available for charging. The second mode includes ensuring that the accessory battery 18 will have an SOC level that allows start of the internal combustion engine 23 at the end of the charging time period (T). Since the time period (T) available for charging is known in the second mode 210, the hybrid control system may use lower charging currents than the respective maximum charging current of the hybrid energy storage 17 and the accessory battery 18 in order to perform a precise or careful charging of the batteries 17, 18.

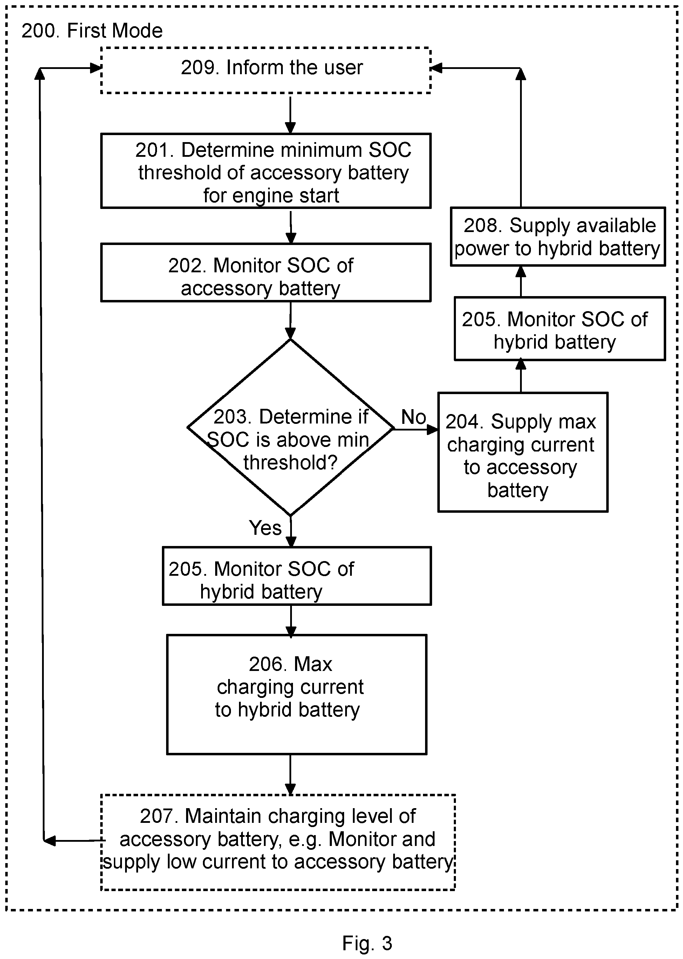

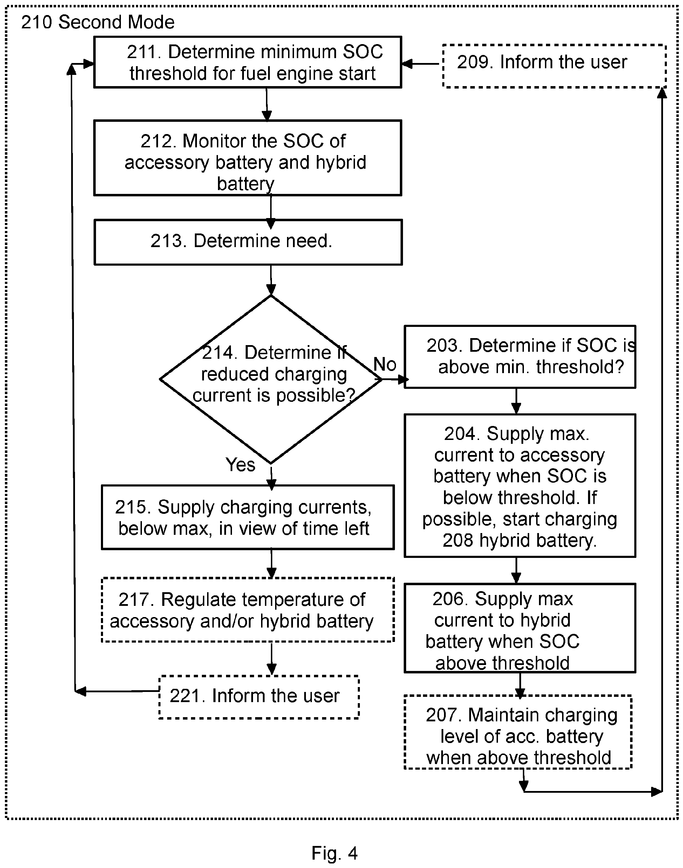

Embodiments of the first mode 200 and the second mode 210 will be further described with reference to the flow diagrams in figures 3 and 4.

In the first mode 200 the method comprises determining 201 a minimum threshold of the charging level, or SOC, of the accessory battery 18 in order to be able to start the internal combustion engine 23 of the hybrid vehicle 1. The threshold may be a predefined nominal value, but the determining 201 preferably also includes basing the threshold for the charging level based on at least one temperature selected from the temperature of the internal combustion engine, the temperature of the accessory battery and the outside temperature. During the charging, the charging level threshold is updated, i.e. the step of determining 201 the charging level threshold is repeated during the charging process. In the first mode, the method also includes monitoring 202 the charging level, or SOC, of the accessory battery 18, and comparing the charging level with the charging level threshold and determining 203 whether the charging level of the accessory battery 18 is above the charging level threshold.

If the charging level is not above the charging level threshold, the method continues with supplying 204 a maximum charging current to the accessory battery 18 in order to ensure a safe start of the internal combustion engine 23 as soon as possible. During charging of the accessory battery 18 with the maximum charging current that the accessory battery 18 can receive, the method also includes charging 208 the hybrid energy storage 17 with the available remaining power. For example, the hybrid controller 20 connects the junction box 11 to the hybrid energy storage 17 by operating connection switches 26 arranged in an electric connection between the hybrid energy storage 17 and the junction box 11 and/or in the junction box 11 or at the hybrid energy storage 17.

However, if the power for providing a maximum charging current to the accessory battery 18 simultaneously as charging the hybrid energy storage 17 is not enough, then, the method includes disconnecting, or not connecting, the hybrid energy storage 17, e.g. by means of the switch 26.

The method preferably also includes a step of monitoring 205 the energy/charging level of the hybrid energy storage 17, and a step of informing 209 the user, such as by means of the HMI 21. The informing 209 of the user may include indicating any of the SOC of the accessory battery 18, the SOC of the hybrid energy storage 17, and time left for fully charging the accessory battery 18, and the time left for fully charging the hybrid energy storage 17. The informing 209 preferably include indicating a warning when the SOC of the accessory battery 18 is low and may jeopardize starting of the internal combustion engine.

The method continues with repeating the steps of determining 201 the charging level threshold of the accessory battery 18, monitoring 202 the charging level of the accessory battery and determining 203 if the charging level of the accessory battery 18 is above the threshold. When the charging level of the accessory battery 203 has reached above the threshold, the method continues with performing charging the hybrid energy storage 17, in steps 205-207. The charging of the hybrid energy storage 17 includes monitoring 205 the energy level, such as the SOC, of the hybrid energy storage 17 and supplying 206 a maximum charging current to the hybrid energy storage 17. The method also includes maintaining 207 the charging level of the accessory battery, for example by supplying a low current to the accessory battery 18. Maintaining 207 the charging level of the accessory battery 18 may include monitoring the current supplied to, or supplied from, the accessory battery 18, so that use of the loads 19 is compensated by feeding current from the DC/DC converter 16.

The steps of monitoring 202 the charging level of the accessory battery 18, determining 201, i.e. updating, the threshold and determining 203, or ensuring, that the charging level is above the threshold is repeated during the charging of the hybrid energy storage 17 in order to guarantee a safe start of the internal combustion engine.

Moreover, the control system may be configured for entering a time period (T) for charging already when the charging process has begun. Thus, during charging in the first mode 200, the method may include repeating the step determining 103 whether a charging time period (T) has been entered, and in such case, the method includes switching from the first mode 200 to the second mode 210.

If determining 203 of whether the level is above the threshold reveals that the charging level of the accessory battery 18 is not above the threshold, the first mode 200 switches to, or continues with, supplying 204 a maximum charging current to the accessory battery 18 again, and informs 209 the user. The charging level of the accessory battery 18 may have fallen due to consumption by the loads 19, or the threshold may have risen due to a change of the temperature of the internal combustion engine 23 and/or the accessory battery 18.

The first mode 200 may also include monitoring (not illustrated) the temperature of the accessory battery 18 and charging the accessory battery 18 in order to heat up the accessory battery in view of the temperature being low, even when the charging level is above the threshold, so as to prepare for a start of the internal combustion engine 23 in cold weather. A similar step of regulating (217) the temperature of the accessory battery is illustrated in figure 4 of the second mode.

The second mode 210 of the method for controlling charging of the hybrid vehicle 1 is performed in a planned manner based on the time period (T) that is available for the charging process.

The second mode 210 also includes determining 211 a charging level threshold of the accessory battery 18 for starting the internal combustion engine. The second mode 210 includes monitoring 212 the charging level of the accessory battery 18 and monitoring 212 the charging level of the hybrid energy storage 17.

For planning the charging process in view of the available time period (T), the second mode 210 continues with determining 213 the energy that is needed for charging the accessory battery 18 and the hybrid energy storage 17. For example, determining the need for charging the accessory battery 18 above the charging level threshold, and fully charging the hybrid energy storage 17.

The second mode 210 continues with determining 214 if charging at a reduced charging current to both batteries are possible. If charging at reduced charging currents, i.e. below the maximum charging currents of the batteries 17, 18 cannot be performed, the second mode 210 is adapted for performing a fast charging, similar to fast charging of the first mode 200.

When charging at reduced currents can be made, the second mode continues with selecting and supplying 215 respective charging currents for the accessory battery 18 and the hybrid energy storage 17, in view of the time left of the time period (T), which charging currents are lower than the maximum charging current for the accessory battery 18 and hybrid energy storage 17, respectively. The charging currents are selected so that each of the batteries 17, 18 are appropriately charged at the end of the time period (T).

The second mode 210 may include regulating 217 the temperature of the accessory battery 18, and suitably also the hybrid energy storage 17. Regulating 217 the temperature of any of the accessory battery 18 and the hybrid energy storage 17 is beneficial if the temperature is low, but also to cool any battery in case any of the batteries 17, 18 becomes overheated.

In for example cold weather, the start of the internal combustion engine 23 becomes easier if the temperature of the accessory battery 18 is higher than the surrounding temperature. The accessory battery 18 may therefore be heated by supplying a high charging current close to the end of the charging process in order to heat up the accessory battery 18. The method of controlling may in such case schedule the charging of the accessory battery 18 so that a fraction of a fully charged SOC is left to be charged at the end of the time period T. For example, a fraction of 80-95%, such as 90%, of full charging level may be charged at a reduced charging current, and a fraction of 5-20%, such as 10%, i.e. the last fraction for fully charging the battery may be supplied with the maximum charging current available or allowed for the battery close before the end of the time period T.

Cooling any of the batteries may require a respective cooler 31b, 32b (illustrated as combined heater and cooler units 31a, 31b; 32a, 32b) installed in the hybrid vehicle 1. The second mode 210 may include monitoring the temperatures of the batteries 17, 18 and the control system may be used to activate any one, or both, of the coolers 31b, 32b should any temperature become high. Also, the first mode 200 may include activating an associated cooler 31b, 32b of any of the accessory battery 18 and hybrid energy storage 17

If reduced charging currents are determined 214 not possible within the charging time period (T), the second mode 210 performs a fast charging using maximum charging currents similar to the first mode 200, and repeatedly checks 214 whether charging with reduced currents becomes possible. The repeated checks are suitably made by repeating the steps of monitoring 212 the charging levels, determining 213 the charging need and determining 214 whether charging at a reduced current is possible.

The fast charging of the second mode includes determining 203 whether the charging level of the accessory battery 18 is above the charging threshold. The charging level threshold is updated by repeatedly determining 211 the minimum charging level needed in the accessory battery 18 for performing an internal combustion engine 23 start, which determining 211 preferably is based on the temperature of the internal combustion engine 23, and/or outside temperature of the hybrid vehicle and/or the temperature of the accessory battery 18.

The fast charging in the second mode 210 includes supplying 204 a maximum charging current to the accessory battery 18 when the charging level of the accessory battery 18 is below the threshold and charging with reduced charging currents is not possible within the time period (T). The maximum charging current is supplied until the charging level becomes higher than the charging level threshold for performing a start of the internal combustion engine 23, or until charging with reduced charging current can be performed, as determined in step 214.

The second mode 210 further includes charging the hybrid energy storage 17 simultaneously as supplying the maximum charging current to the accessory battery 18 if the available power from the external energy supply is enough for this charging. Otherwise the hybrid energy storage 17 may be disconnected.

The second mode 210 includes charging the hybrid energy storage 17 by supplying 206 a maximum charging current of the hybrid energy storage 17 when the charging level of the accessory battery 18 is above the charging level threshold and charging with reduced current cannot be made in view of the time left of the time period (T). When supplying a maximum charging current to the hybrid energy storage 17, the second mode includes maintaining the charging level of the accessory battery 18, for example by supplying and monitoring a small charging current to the accessory battery 18.

The second mode 210 preferably includes informing 209, 221 the user of the charging process and may include informing 209 the user that the charging level of the accessory battery 18 is too low for an internal combustion engine 23 start, and/or informing 209, 221 the user of the time left for charging the accessory 18, the time left for charging the hybrid energy storage 17, and/or the charging levels of any or both of the batteries 17, 18.

The charging process may also include adapting the hybrid vehicle for start of the hybrid vehicle 1, especially when a charging time period (T) has been defined. The charging process of the invention may include preparing the hybrid vehicle 1 for take-off close to the end of the charging time period (T) by means of heating or cooling devices or equipment of the hybrid vehicle 1. For example, the internal combustion engine 23, the after treatment system, including a catalytic converter, the oil of the electric machine 12, the driver cab may be heated or cooled. The heating and/or cooling is preferably also based on temperature information, such as measurements of the surrounding temperature or as received in a metrological report. The above mentioned preparations can be used to improve the starting capability of the internal combustion engine 23, the operation of the electric machine 12 and the driver environment. Also, it would contribute to a reduction of the emissions from exhaust gas after a cold start of the internal combustion engine 23.

A hybrid vehicle 1, a method and the control system of the hybrid vehicle 1 has been described in a few embodiments for enabling a person skilled in the art to provide the invention. The hybrid vehicle comprises an electric machine 12, an internal combustion engine, ICE, 23, a hybrid 17 and an accessory battery 18, and control system 11, 15, 16, 20, 22 with means 21 for defining a time period T for charging. The method comprises charging in a first mode 200 when T has not been defined and in a second mode 210 when T has been defined. The first and the second mode comprises monitoring 202, 212 the state of charge of the accessory battery, determining 201, 211 a charging threshold for enabling start of the ICE by means of the accessory battery, and determining 203 whether the charging level is above the threshold. The first mode 200 comprises supplying 204 a maximum charging current to the accessory battery when the charging level is lower than the charging threshold. The second mode 210 comprises determining 213 a charging need, determining 214 whether charging with reduced currents is possible based on the need and T, and supplying 215 a respective lower than maximum charging current to the battery and storage when possible. However, as is readily appreciated by a person skilled in the art, other embodiments than those herein described are equally possible within the scope of the invention, as defined by the appended patent claims.

## Claims

1. A method for controlling charging of a hybrid vehicle (1) comprising charging the hybrid vehicle with electric energy received from an external energy supply, which hybrid vehicle comprises a control system (11, 15, 16, 20, 22), an electric machine (12), an internal combustion engine (23), a hybrid energy storage (17) and an accessory battery (18), wherein the hybrid energy storage (17) is arranged for supplying electric power to the electric machine (12) and wherein the accessory battery (18) is arranged for supplying power to start the internal combustion engine (23), said control system being provided with means for defining a time period (T) for performing the charging, wherein the method comprises checking (103) whether a time period (T) has been defined and controlling the charging in accordance with a first mode (200) when a time period (T) has not been defined and in accordance with a second mode (210) when a time period has been defined, wherein said first mode (200) and said second mode (210) comprises:
- monitoring (202, 212) the state of charge of the accessory battery (18),
- determining (201, 211) a charging threshold for enabling start of the internal combustion engine (23) by means of the accessory battery (18),
- determining (203) whether the charging level of the accessory battery (18) is above the charging level threshold,
said first mode (200) further comprises:
- supplying (204) a maximum charging current to the accessory battery (18) when the charging level of the accessory battery (18) is lower than the charging threshold,
said second mode (210) further comprises:
- determining (213) a first charging need for the accessory battery and a second charging need for the hybrid energy storage (17),
- determining (214) whether charging with reduced current is possible for the accessory battery (18) and the hybrid energy storage (17) based on the determined first and second need and the charging time period (T), and
- supplying (215) a charging current below the maximum charging current of the hybrid energy storage (17) to the hybrid energy storage (17) and a charging current below the maximum charging current of the accessory battery (18) to the accessory battery (18) when reduced current is possible.

2. A method for controlling charging according to claim 1, wherein said first mode (200) comprises
- supplying (208) available power to the hybrid energy storage (17) when supplying (204) the maximum charging current to the accessory battery (18), when power for charging the hybrid energy storage simultaneously as supplying the maximum charging current to the accessory battery (18) is available.

3. A method for controlling charging according to claim 1 or 2, wherein said first mode comprises
- supplying (206) a maximum charging current to the hybrid energy storage (17) when the charging level of the accessory battery (18) is higher than the charging level threshold.

4. A method for controlling charging according any of claims 1 to claim 3, wherein said first mode (200) comprises
- maintaining (207) the charging level of the accessory battery (18) above the threshold when the charging level of the accessory battery (18) is or becomes higher than the charging level threshold.

5. A method for controlling charging according to any of claims 1 to 4, further including repeating the step of determining (201, 211) the charging threshold, and the step of determining (203) whether the charging level of the accessory battery (18) is above the charging level threshold.

6. A method for controlling charging according to any of claims 1 to 5, wherein the determining (201, 211) of the charging level threshold is based on a temperature, which temperature is any of the outside temperature of the hybrid vehicle (1) and/or the temperature of the accessory (18) battery and/or the temperature of the internal combustion engine (23).

7. A method for controlling charging according to any of claims 1 to 6, wherein said second mode further comprises:
- supplying (204) a maximum charging current of the accessory battery (18) to the accessory battery (18) when determining (214) that reduced charging currents are not possible and when determining (203) that the charging level of the accessory battery (18) is below the charging level threshold, and
- supplying (206) a maximum charging current of the hybrid energy storage (17) to the hybrid energy storage (17) when determining (214) that reduced charging currents are not possible and when determining (203) that the charging level of the accessory battery (18) is above the charging level threshold.

8. A method for controlling charging according to any of claims 1 to 7, wherein said second mode further comprises regulating (217) the temperature of the accessory battery (18) towards the end of the time period (T).

9. A method for controlling charging according to claim 8, wherein the regulating (217) of the temperature includes increasing the temperature by means of supplying a higher charging current to the accessory battery (18), or by means of activating a heater (31a) that is arranged to heat the accessory battery (18).

10. A method for controlling charging according to claim 8, wherein the regulating (217) of the temperature includes reducing the temperature by means of activating a cooler (31b) that is arranged to cool the accessory battery (18).

11. A method for controlling charging according to any of claims 1 to 10, wherein said second mode further comprises regulating (217) the temperature of the hybrid energy storage (17) towards the end of the time period (T).

12. A method for controlling charging according to claim 8, wherein the regulating (217) of the temperature includes:
- increasing the temperature by means of supplying a higher charging current to the hybrid energy storage (17), or
- increasing the temperature by means of activating a heater (32a) that is arranged to heat the hybrid energy storage (17), or
- reducing the temperature by means of activating a cooler (32b) that is arranged to cool the hybrid energy storage (17).

13. A method for controlling charging according to any of claims 1 to 12, wherein said first mode and said second mode further comprises informing a user of:
- the charging level of the hybrid energy storage and/or the accessory battery; and/or informing the user of:
- an estimated time left for charging of the hybrid energy storage, which time left is estimated based on the charging level of the hybrid energy storage, the charging level of the accessory battery and the available power.

14. A method for controlling charging according to any of claims 1 to 12, wherein said second mode further comprises informing a user of:
- an estimation of the expected charging level at the end of the charging for the hybrid energy storage (17) or for the accessory battery (18), which expected charging level is estimated based on the charging level of the hybrid energy storage (17), the charging level of the accessory battery (18), the available power and the time period (T).

15. A control system (11, 15, 16, 20, 22) for controlling charging of a hybrid vehicle (1) with electric energy from an external energy supply, which hybrid vehicle comprises an electric machine (12), an internal combustion engine (23), a hybrid energy storage (17) and an accessory battery (18), wherein the hybrid energy storage (17) is arranged for supplying electric power to the electric machine (12) and wherein the accessory battery (18) is arranged for supplying power to start the internal combustion engine (23), said hybrid vehicle (1) is further provided with means for defining a time period (T) for performing the charging, said control system (11, 15, 16, 20, 22) being configured to perform the method for charging of a hybrid vehicle according to any of claims 1-14.

16. A hybrid vehicle comprising an electric machine (12), an internal combustion engine (23), a hybrid energy storage (17) and an accessory battery (18), wherein the hybrid energy storage (17) is arranged for supplying electric power to the electric machine (12) and wherein the accessory battery (18) is arranged for supplying power to start the internal combustion engine (23), said hybrid vehicle (1) being further provided with means for defining a time period (T) for performing the charging, and a control system according to claim 15.

## Patentansprüche

1. Verfahren zum Steuern des Aufladens eines Hybridfahrzeugs (1), umfassend ein Aufladen des Hybridfahrzeugs mit von einer externen Energiezufuhr erhaltener elektrischer Energie, wobei das Hybridfahrzeug ein Steuersystem (11, 15, 16, 20, 22), eine elektrische Maschine (12), einen Verbrennungsmotor (23), einen Hybridenergiespeicher (17) und eine Zusatzbatterie (18) aufweist, wobei der Hybridenergiespeicher (17) dazu angeordnet ist, der elektrischen Maschine (12) elektrischen Strom zu liefern, und wobei die Zusatzbatterie (18) dazu angeordnet ist, Strom zum Starten des Verbrennungsmotors (23) zu liefern, wobei das Steuersystem mit einer Einrichtung zum Festlegen einer Zeitdauer (T) zum Durchführen des Aufladens versehen ist, wobei das Verfahren umfasst ein Prüfen (103), ob eine Zeitdauer (T) festgelegt worden ist, und ein Steuern des Aufladens gemäß einem ersten Modus (200), wenn eine Zeitdauer (T) nicht festgelegt worden ist, und gemäß einem zweiten Modus (210), wenn eine Zeitdauer festgelegt worden ist, wobei der erste Modus (200) und der zweite Modus (210) umfassen:
- Überwachen (202, 212) des Ladezustands der Zusatzbatterie (18),
- Festlegen (201, 211) einer Ladeniveauschwelle zum Ermöglichen eines Startens des Verbrennungsmotors (23) mittels der Zusatzbatterie (18),
- Feststellen (203), ob das Ladeniveau der Zusatzbatterie (8) über der Ladeniveauschwelle ist,
wobei der erste Modus (200) ferner umfasst:
- Liefern (204) eines maximalen Ladestroms an die Zusatzbatterie (18), wenn das Ladeniveau der Zusatzbatterie (18) niedriger ist als die Ladeniveauschwelle,
wobei der zweite Modus (210) ferner umfasst:
- Ermitteln (213) eines ersten Ladebedarfs für die Zusatzbatterie und eines zweiten Ladebedarfs für den Hybridenergiespeicher (17),
- Feststellen (214), basierend auf dem ermittelten ersten und zweiten Bedarf und der Ladezeitdauer (T), ob ein Aufladen mit reduziertem Strom für die Zusatzbatterie (18) und den Hybridenergiespeicher (17) möglich ist, und
- Liefern (215) eines Ladestroms unterhalb des maximalen Ladestroms des Hybridenergiespeichers (17) an den Hybridenergiespeicher (17) und eines Ladestroms unterhalb des maximalen Ladestroms der Zusatzbatterie (18) an die Zusatzbatterie (18), wenn ein reduzierter Strom möglich ist.

2. Verfahren zum Steuern des Aufladens nach Anspruch 1, wobei der erste Modus (200) umfasst
- Liefern (208) von verfügbarem Strom an den Hybridenergiespeicher (17) beim Liefern (204) des maximalen Ladestroms an die Zusatzbatterie (18), wenn Strom zum Aufladen des Hybridenergiespeichers gleichzeitig mit dem Liefern des maximalen Ladestroms an die Zusatzbatterie (18) verfügbar ist.

3. Verfahren zum Steuern des Aufladens nach Anspruch 1 oder 2, wobei der erste Modus umfasst
- Liefern (206) eines maximalen Ladestroms an den Hybridenergiespeicher (17), wenn das Ladeniveau der Zusatzbatterie (18) höher ist als die Ladeniveauschwelle.

4. Verfahren zum Steuern des Aufladens nach einem der Ansprüche 1 bis 3, wobei der erste Modus (200) umfasst
- Halten (207) des Ladeniveaus der Zusatzbatterie (18) über der Schwelle, wenn das Ladeniveau der Zusatzbatterie (18) höher ist oder wird als die Ladeniveauschwelle.

5. Verfahren zum Steuern des Aufladens nach einem der Ansprüche 1 bis 4, ferner umfassend ein Wiederholen des Schritts des Festlegens (201, 211) der Ladeniveauschwelle und des Schritts des Feststellens (203), ob das Ladeniveau der Zusatzbatterie (18) über der Ladeniveauschwelle ist.

6. Verfahren zum Steuern des Aufladens nach einem der Ansprüche 1 bis 5, wobei das Festlegen (201, 211) der Ladeniveauschwelle auf einer Temperatur basiert, wobei die Temperatur eine jegliche aus der Außentemperatur des Hybridfahrzeugs (1) und/oder der Temperatur der Zusatzbatterie (18) und/oder der Temperatur des Verbrennungsmotors (23) ist.

7. Verfahren zum Steuern des Aufladens nach einem der Ansprüche 1 bis 6, wobei der zweite Modus ferner umfasst:
- Liefern (204) eines maximalen Ladestroms der Zusatzbatterie (18) an die Zusatzbatterie (18) wenn festgestellt (214) wird, dass verringerte Ladeströme nicht möglich sind, und wenn festgestellt (203) wird, dass das Ladeniveau der Zusatzbatterie (18) unter der Ladeniveauschwelle ist, und
- Liefern (206) eines maximalen Ladestroms des Hybridenergiespeichers (17) an den Hybridenergiespeicher (17) wenn festgestellt (214) wird, dass reduzierte Ladeströme nicht möglich sind, und wenn festgestellt (203) wird, dass das Ladeniveau der Zusatzbatterie (18) über der Ladeniveauschwelle ist.

8. Verfahren zum Steuern des Aufladens nach einem der Ansprüche 1 bis 7, wobei der zweite Modus ferner ein Regeln (217) der Temperatur der Zusatzbatterie (18) zum Ende der Zeitdauer (T) umfasst.

9. Verfahren zum Steuern des Aufladens nach Anspruch 8, wobei das Regeln (217) der Temperatur ein Erhöhen der Temperatur durch Liefern eines höheren Ladestroms an die Zusatzbatterie (18) oder durch Einschalten einer Heizung (31a) umfasst, die dazu angeordnet ist, die Zusatzbatterie (18) zu beheizen.

10. Verfahren zum Steuern des Aufladens nach Anspruch 8, wobei das Regeln (217) der Temperatur ein Reduzieren der Temperatur durch Einschalten einer Kühlvorrichtung (31b) umfasst, die dazu angeordnet ist, die Zusatzbatterie (18) zu kühlen.

11. Verfahren zum Steuern des Aufladens nach einem der Ansprüche 1 bis 10, wobei der zweite Modus ferner ein Regeln (217) der Temperatur des Hybridenergiespeichers (17) zum Ende der Zeitdauer (T) umfasst.

12. Verfahren zum Steuern des Aufladens nach Anspruch 8, wobei das Regeln (217) der Temperatur beinhaltet:
- Erhöhen der Temperatur durch Liefern eines höheren Ladestroms an den Hybridenergiespeicher (17), oder
- Erhöhen der Temperatur durch Einschalten einer Heizung (32a), die dazu angeordnet ist, den Hybridenergiespeicher (17) zu beheizen, oder
- Verringern der Temperatur durch Einschalten einer Kühlvorrichtung (32b), die dazu angeordnet ist, den Hybridenergiespeicher (17) zu kühlen.

13. Verfahren zum Steuern des Aufladens nach einem der Ansprüche 1 bis 12, wobei der erste Modus und der zweite Modus ferner umfassen ein Informieren eines Benutzers über:
- das Ladeniveau des Hybridenergiespeichers und/oder der Zusatzbatterie, und/oder ein Informieren des Benutzers über:
- eine geschätzte verbleibende Zeit zum Aufladen des Hybridenergiespeichers, wobei die verbleibende Zeit abgeschätzt wird basierend auf dem Ladeniveau des Hybridenergiespeichers, dem Ladeniveau der Zusatzbatterie und dem verfügbaren Strom.

14. Verfahren zum Steuern des Aufladens nach einem der Ansprüche 1 bis 12, wobei der zweite Modus ferner umfasst ein Informieren eines Benutzers über:
- eine Abschätzung des erwarteten Ladeniveaus für den Hybridenergiespeicher (17) oder für die Zusatzbatterie (18) am Ende des Aufladens, wobei das erwartete Ladeniveau abgeschätzt wird basierend auf dem Ladeniveau des Hybridenergiespeichers (17), dem Ladeniveau der Zusatzbatterie (18), dem verfügbaren Strom und der Zeitdauer (T).

15. Steuersystem (11, 15, 16, 20, 22) zum Steuern des Aufladens eines Hybridfahrzeugs (1) mit elektrischer Energie aus einer externen Energiezufuhr, wobei das Hybridfahrzeug eine elektrische Maschine (12), einen Verbrennungsmotor (23), einen Hybridenergiespeicher (17) und eine Zusatzbatterie (18) aufweist, wobei der Hybridenergiespeicher (17) dazu angeordnet ist, der elektrischen Maschine (12) elektrischen Strom zu liefern, und wobei die Zusatzbatterie (18) dazu angeordnet ist, Strom zum Starten des Verbrennungsmotors (23) zu liefern, wobei das Hybridfahrzeug (1) ferner mit einer Einrichtung zum Festlegen einer Zeitdauer (T) zum Durchführen des Aufladens versehen ist, wobei das Steuersystem (11, 15, 16, 20, 22) dazu eingerichtet ist, das Verfahren zum Aufladen eines Hybridfahrzeugs nach einem der Ansprüche 1 bis 14 auszuführen.

16. Hybridfahrzeug mit einer elektrischen Maschine (12), einem Verbrennungsmotor (23), einem Hybridenergiespeicher (17) und einer Zusatzbatterie (18), wobei der Hybridenergiespeicher (17) dazu angeordnet ist, der elektrischen Maschine (12) elektrischen Strom zu liefern, und wobei die Zusatzbatterie (18) dazu angeordnet ist, Strom zum Starten des Verbrennungsmotors (23) zu liefern, wobei das Hybridfahrzeug (1) ferner mit einer Einrichtung zum Festlegen einer Zeitdauer (T) zum Durchführen des Aufladens und einem Steuersystem nach Anspruch 15 versehen ist.

## Revendications

1. Procédé pour le contrôle de la charge d'un véhicule hybride (1) comprenant la charge du véhicule hybride avec de l'énergie électrique reçue d'une alimentation en énergie externe, lequel véhicule hybride comprend un système de commande (11, 15, 16, 20, 22), une machine électrique (12), un moteur à combustion interne (23), un stockage d'énergie hybride (17) et une batterie accessoire (18), dans lequel le stockage d'énergie hybride (17) est agencé pour la fourniture d'énergie électrique à la machine électrique (12) et dans lequel la batterie accessoire (18) est agencée pour la fourniture d'énergie pour démarrer le moteur à combustion interne (23), ledit système de commande étant pourvu de moyens pour la définition d'une période de temps (T) pour l'exécution de la charge, dans lequel le procédé comprend la vérification (103) de si un une période de temps (T) a été définie et la commande de la charge conformément à un premier mode (200) lorsqu'une période de temps (T) n'a pas été définie et conformément à un deuxième mode (210) lorsqu'une période de temps a été définie, dans lequel ledit premier mode (200) et ledit deuxième mode (210) comprennent :
- la surveillance (202, 212) de l'état de charge de la batterie accessoire (18),
- la détermination (201, 211) d'un seuil de charge pour permettre le démarrage du moteur à combustion interne (23) au moyen de la batterie accessoire (18),
- la détermination (203) de si le niveau de charge de la batterie accessoire (18) est supérieur au seuil de niveau de charge,
ledit premier mode (200) comprend en outre :
- la fourniture (204) d'un courant de charge maximum à la batterie accessoire (18) lorsque le niveau de charge de la batterie accessoire (18) est inférieur au seuil de charge,
ledit deuxième mode (210) comprend en outre :
- la détermination (213) d'un premier besoin de charge pour la batterie accessoire et d'un deuxième besoin de charge pour le stockage d'énergie hybride (17),
- la détermination (214) de si la charge avec un courant réduit est possible pour la batterie accessoire (18) et le stockage d'énergie hybride (17) sur base du premier et du deuxième besoin déterminés et de la période de temps de charge (T), et
- la fourniture (215) d'un courant de charge en dessous du courant de charge maximum du stockage d'énergie hybride (17) au stockage d'énergie hybride (17) et d'un courant de charge en dessous du courant de charge maximum de la batterie accessoire (18) à la batterie accessoire (18) lorsque le courant réduit est possible.

2. Procédé de contrôle de la charge selon la revendication 1, dans lequel ledit premier mode (200) comprend
- la fourniture (208) d'énergie disponible au stockage d'énergie hybride (17) lors de la fourniture (204) du courant de charge maximum à la batterie accessoire (18), lorsque de d'énergie pour la charge du stockage d'énergie hybride simultanément à la fourniture du courant de charge maximal à la batterie accessoire (18) est disponible.

3. Procédé de contrôle de la charge selon la revendication 1 ou 2, dans lequel ledit premier mode comprend
- la fourniture (206) d'un courant de charge maximum au stockage d'énergie hybride (17) lorsque le niveau de charge de la batterie accessoire (18) est supérieur au seuil de niveau de charge.

4. Procédé de contrôle de la charge selon l'une quelconque des revendications 1 à la revendication 3, dans lequel ledit premier mode (200) comprend
- le maintien (207) du niveau de charge de la batterie accessoire (18) au-dessus du seuil lorsque le niveau de charge de la batterie accessoire (18) est ou devient supérieur au seuil de niveau de charge.

5. Procédé de contrôle de la charge selon l'une quelconque des revendications 1 à 4, comprenant en outre la répétition de l'étape de détermination (201, 211) du seuil de charge, et de l'étape de détermination (203) de si le niveau de charge de la batterie accessoire (18) est supérieur au seuil de niveau de charge.

6. Procédé de contrôle de la charge selon l'une quelconque des revendications 1 à 5, dans lequel la détermination (201, 211) du seuil de niveau de charge est sur base d'une température, laquelle température est l'une quelconque de la température externe du véhicule hybride (1) et/ ou de la température de la batterie accessoire (18) et/ ou de la température du moteur à combustion interne (23).

7. Procédé de contrôle de la charge selon l'une quelconque des revendications 1 à 6, dans lequel ledit deuxième mode comprend en outre :
- la fourniture (204) d'un courant de charge maximum de la batterie accessoire (18) à la batterie accessoire (18) lors de la détermination (214) que les courants de charge réduits ne sont pas possibles et lors de la détermination (203) que le niveau de charge de la batterie accessoire (18) est inférieur au seuil de niveau de charge, et
- la fourniture (206) d'un courant de charge maximum du stockage d'énergie hybride (17) au stockage d'énergie hybride (17) lors de la détermination (214) que les courants de charge réduits ne sont pas possibles, et lors de la détermination (203) que le niveau de charge de la batterie accessoire (18) dépasse le seuil de niveau de charge.

8. Procédé de contrôle de la charge selon l'une quelconque des revendications 1 à 7, dans lequel ledit deuxième mode comprend en outre la régulation (217) de la température de la batterie accessoire (18) vers la fin de la période de temps (T).

9. Procédé de contrôle de la charge selon la revendication 8, dans lequel la régulation (217) de la température comprend l'augmentation de la température au moyen de la fourniture d'un courant de charge plus élevé à la batterie accessoire (18), ou au moyen de l'activation d'un dispositif de chauffage (31a) qui est agencé pour chauffer la batterie accessoire (18).

10. Procédé de contrôle de la charge selon la revendication 8, dans lequel la régulation (217) de la température comprend la réduction de la température au moyen de l'activation d'un dispositif de refroidissement (31b) qui est agencé pour refroidir la batterie accessoire (18).

11. Procédé de contrôle de la charge selon l'une quelconque des revendications 1 à 10, dans lequel ledit deuxième mode comprend en outre la régulation (217) de la température du stockage d'énergie hybride (17) vers la fin de la période de temps (T).

12. Procédé de contrôle de la charge selon la revendication 8, dans lequel la régulation (217) de la température comprend :
- l'augmentation de la température au moyen de la fourniture d'un courant de charge plus élevé au stockage d'énergie hybride (17), ou
- l'augmentation de la température au moyen de l'activation d'un dispositif de chauffage (32a) agencé pour chauffer le stockage d'énergie hybride (17), ou
- la réduction de la température au moyen de l'activation d'un dispositif de refroidissement (32b) agencé pour refroidir le stockage d'énergie hybride (17).

13. Procédé de contrôle de la charge selon l'une quelconque des revendications 1 à 12, dans lequel ledit premier mode et ledit deuxième mode comprennent en outre l'information à un utilisateur :
- du niveau de charge du stockage d'énergie hybride et/ ou de la batterie accessoire ; et/ ou l'information à l'utilisateur :
- d'un temps estimé restant pour la charge du stockage d'énergie hybride, lequel temps estimé restant est sur base du niveau de charge du stockage d'énergie hybride, du niveau de charge de la batterie accessoire et de la puissance disponible.

14. Procédé de contrôle de la charge selon l'une quelconque des revendications 1 à 12, dans lequel ledit deuxième mode comprend en outre l'information à un utilisateur :
- d'une estimation du niveau de charge attendu à la fin de la charge pour le stockage d'énergie hybride (17) ou pour la batterie accessoire (18), lequel niveau de charge attendu est estimé sur base du niveau de charge du stockage d'énergie hybride (17), du niveau de charge de la batterie accessoire (18), de la puissance disponible et de la période de temps (T).

15. Système de commande (11, 15, 16, 20, 22) pour le contrôle de la charge d'un véhicule hybride (1) avec de l'énergie électrique provenant d'une alimentation en énergie externe, lequel véhicule hybride comprend une machine électrique (12), un moteur à combustion interne (23), un stockage d'énergie hybride (17) et une batterie accessoire (18), dans lequel le stockage d'énergie hybride (17) est agencé pour la fourniture d'énergie électrique à la machine électrique (12) et dans lequel la batterie accessoire (18) est agencée pour la fourniture d'énergie pour démarrer le moteur à combustion interne (23), ledit véhicule hybride (1) est en outre fourni de moyens pour la définition d'une période de temps (T) pour l'exécution de la charge, ledit système de commande (11, 15, 16, 20, 22) étant configuré pour exécuter le procédé de charge d'un véhicule hybride selon l'une quelconque des revendications 1-14.

16. Véhicule hybride comprenant une machine électrique (12), un moteur à combustion interne (23), un stockage d'énergie hybride (17) et une batterie accessoire (18), dans lequel le stockage d'énergie hybride (17) est agencé pour la fourniture d'énergie électrique à la machine électrique (12), et dans lequel la batterie accessoire (18) est agencée pour la fourniture d'énergie pour démarrer le moteur à combustion interne (23), ledit véhicule hybride (1) étant en outre fourni de moyens de définition d'une période de temps (T) pour l'exécution de la charge, et d'un système de commande selon la revendication 15.
